Europäisches Patentamt

European Patent Office

Office européen des brevets

(19)

(11) EP 0 905 914 A2

(12) **EUROPEAN PATENT APPLICATION**

(43) Date of publication:
**31.03.1999 Bulletin 1999/13**

(51) Int Cl.6: **H04B 1/12**

(21) Application number: **98306725.7**

(22) Date of filing: **21.08.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **27.08.1997 KR 9741735**
**27.08.1997 KR 9741736**

(71) Applicant: **Shin-A Telecom**
**Seocho-Ku, Seoul (KR)**

(72) Inventors:
• **Ko, Sung Sun, c/o Shin-A-Telecom**
**Seocho-ku, Seoul (KR)**
• **Baek, Rack June, c/o Shin-A-Telecom**
**Seocho-ku, Seoul (KR)**
• **Shin, Dong Ho, c/o Shin-A-Telecom**
**Seocho-ku, Seoul (KR)**

(74) Representative: **Mounteney, Simon James**
**MARKS & CLERK,**
**57-60 Lincoln's Inn Fields**
**London WC2A 3LS (GB)**

(54) **Apparatus for cancelling radio frequency interference between transmitting antenna and receiving antenna, repeating system and transmitting and receiving system using the same**

(57)   Apparatus for cancelling radio frequency interference between a transmitting antenna (21) and a receiving antenna; a repeating system; and a transmitting and receiving system using the apparatus. The apparatus for cancelling radio frequency interference between a transmitting antenna and a receiving antenna cancels interference by adding an interference signal to the 180° phase-shifted signal of the interference signal to obtain a desired signal. The apparatus provides an interference canceller (27) which attenuates the transmitting signal so as to have the same amplitude as the signal radiated through the transmitting antenna (21) and received by the receiving antenna (the interference signal) (21) but with reversed phase. As the attenuated signal is combined with the received signal including the interference signal, only the desired signal remains.

FIG. 4

**Description**

**BACKGROUND OF THE INVENTION**

1. Technical Field of the Invention

The present invention relates to an apparatus for canceling radio frequency interference between a transmitting antenna and a receiving antenna, a repeating system and a transmitting and receiving system using the same, and particularly relates to an apparatus for canceling radio frequency interference between a transmitting antenna and a receiving antenna which cancels interference by adding an interference signal to the phase shifted signal of an interference signal by 180°.

2. Description of the Prior Art

The more kinds of radio communication service become, the closer becomes the distance between the base stations and between the used frequency bands, which occur the howling and the inter modulation distortion (IMD). In the worst case, it is possible for the howling and the IMD to interrupt radio communication.

Also, in general radio communication, shadow areas are affected by distance between a transmitter and a receiver, buildings, hills and so on. In shadow region, there is a need of another transmitting system. However, installation of the transmitting system is not inefficient in most cases because shadow areas are not large, or there are few receivers in shadow area. Therefore, a repeater is used in a small shadow areas of which diameter is within a few kilometers.

However, since there are a transmitting antenna and a receiving antenna in the same area, the radiated signal through the transmitting antenna flows into the contiguous receiving antenna, thereby generating serious interference with the signal flowing into the receiver. To solve this problem, the transmitter should be separated from the receiver, a selected distance between them should be maintained for a large isolation value. However, separation of the transmitter from the receiver and maintenance of a large distance between them are very difficult.

In other words, since distance between the transmitting antenna and the receiving antenna should be kept long, for example, from tens meters to hundreds meters in a conventional ground repeating system, transmission lines become long, whereby some problems arise in laying the transmission lines under the ground and in maintenance of them. Also, since the transmitting antenna should be placed at a separate space from the space on which the receiving antenna is placed, there are some problems in spatial restriction and maintenance of communication system.

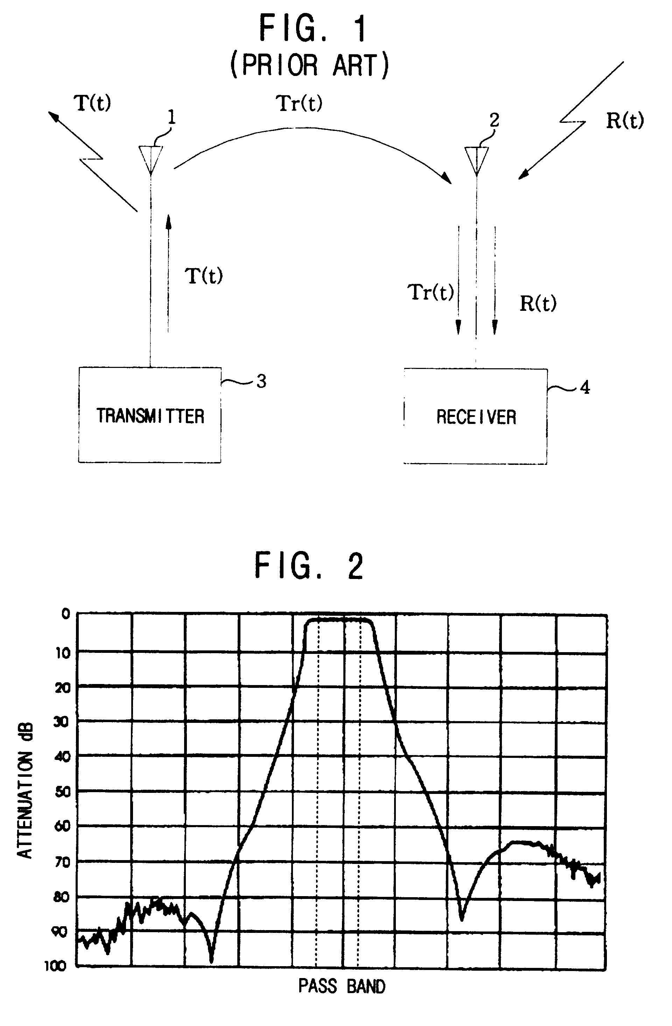

Fig.1 illustrates a transmitting and receiving system in accordance with the conventional communication system.

Power level of the signal T(t) transmitted through a transmitting antenna 1 and received by a receiving antenna 2 is affected by characteristics of antenna(directivity or non-directivity), installation condition and environments of the antennas. The power level of the signal T(t) to be transmitted through the transmitting antenna 1 ranges between 50dB and 80dB. The power level of the signal T(t) is higher than that of a desired signal R(t) received by the receiving antenna 2.

If the power level of the signal T(t) transmitted from the transmitter 3 is 10W(40dBm) and isolation value between the transmitting antenna and the receiving antenna is 80dB, then the power level of the signal received by the contiguous receiving antenna 2 of a receiver 4 will be -40dBm.

Though a general receiver uses a radio frequency bandpass filter, the bandpass filter is not considerably able to attenuate contiguous band of the used band . If the received signal provided to a low noise amplifier has little attenuation, then a portion of the used band of two signals is overlapped. Therefore, this overlapped signal considerably decreases communication quality.

Fig. 2 illustrates a characteristic of a bandpass filter of a base station for CDMA(Code Division Multiple Access) communication. The bandpass filter passes about 10MHz frequency band. The frequency 10MHz away from the pass band has a lot of attenuation value about -45dB. However, the near frequency to the pass band has the same attenuation characteristics. If only one channel may be used for communication, the interference does not considerably affect the receiver 4 of Fig.1. However, if multiple channels are used for communication, the interference gives the receiver 4 serious problems.

An amplifier amplifies an input signal at a constant gain. Power strength of which amplifier linearly amplifies and outputs the input signal refers to 1dB compression point. If power level of the input signal is higher than the 1dB compression point, the amplifiers operates in a non-linear region, such that the amplified signal has a serious distortion. In radio communication, the distortion of the signal occurs to interrupt communication in the worst case.

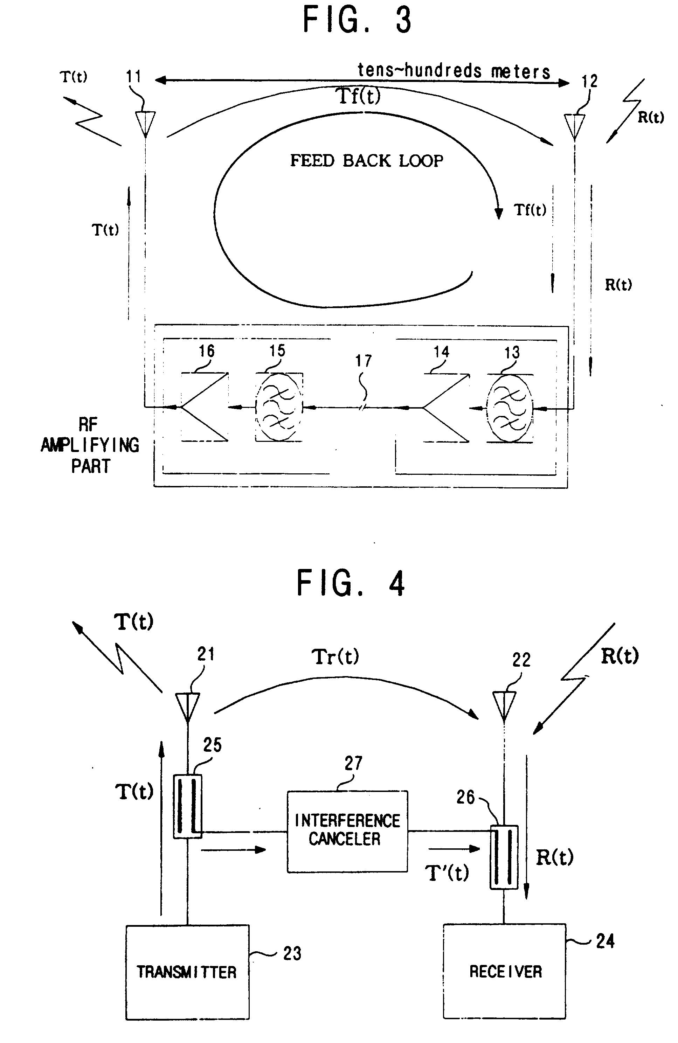

Fig. 3 illustrates a conventional ground repeating system.

In the conventional ground repeating system, the receiving antenna needs to be set up at the place where the desired signal R(t) can be received well and the transmitting antenna needs at the place where the desired signal R(t) can not be received well. A radio frequency amplifier for repeating is placed between the transmitting antenna and the receiving antenna. The radio frequency amplifier for repeating consists of RF bandpass filters 13 and 15, RF low noise amplifier 14 and RF power amplifier 16.

The signal R(t) received by the receiving antenna 12 passes through bandpass filters 13 and 15. The unwanted band of the received signal R(t) is removed out in the bandpass filters 13 and 15. The filtered signal is amplified by the amplifiers 14 and 16. The amplified signal is radiated through the transmitting antenna 11.

At this time, the signal T (t) radiated through the transmitting antenna 11 flows not only in the wanted direction but also in the others direction. For that reason, the receiving antenna 12 receives not only a desired signal R(t) but also the unwanted(interference) signal. For communication, the power level of the desired signal R(t) should be higher than that of the interference signal Tf(t) which is received by the receiving antenna 12 after being radiated through the transmitting antenna 11. Therefore, isolation distance between the transmitting antenna and the receiving antenna needs to be tens through hundreds meters such that the power level of the desired signal is higher than that of the signal Tf(t).

If the power level of the transmitting signal T(t) is higher than that of the received signal by the receiving antenna 12, the receiving antenna 12, amplifiers 13 and 15, the transmitting antenna and free space make a feedback loop. The feedback loop makes the ground repeating system oscillated.

## SUMMARY OF THE INVENTION

Therefore, an object of the present invention is to provide an apparatus for canceling radio frequency interference between a transmitting antenna and a receiving antenna by combining the received interference signal and the reversed signal of the received interference signal.

Another object of the present invention is to provide an transmitting and receiving system using an apparatus for canceling radio frequency interference between a transmitting antenna and a receiving antenna by combining the received interference signal and the reversed signal of the received interference signal.

Another object of the present invention is to provide a repeating system using an apparatus for canceling radio frequency interference between a transmitting antenna and a receiving antenna by combining the received interference signal and the reversed signal of the received interference signal.

According to the first aspect of the present invention, this object is accomplished by providing an apparatus for canceling radio frequency interference between transmitting antenna and receiving antenna, said apparatus comprising:

a power dividing means for dividing input signal from an outside and for providing a transmitting antenna with a first divided signal;
an interference canceling means for attenuating and phase-shifting a second divided signal so as to have a selected amplitude and a selected phase; and
a power coupling means for combining signal radiated through said transmitting antenna and received by a receiving antenna and the signal from said interference canceling means, thereby outputting a desired signal.

According to the second aspect of the present invention, this object is accomplished by providing a transmitting and receiving system using an apparatus for canceling radio frequency interference between transmitting antenna and receiving antenna, said transmitting and receiving system comprising:

a transmitting means for generating signal to be transmitted;
a power dividing means for dividing input signal from said transmitting means and for providing a transmitting antenna with a first divided signal;
an interference canceling means for attenuating and phase-shifting a second divided signal so as to have a selected amplitude and a selected phase;
a power coupling means for combining signal radiated through said transmitting antenna and received by a receiving antenna and the signal from said interference canceling means, thereby outputting a desired signal; and
a receiving means for performing receiving process of signal from said power coupling means.

According to the third aspect of the present invention, this object is accomplished by providing a repeating system using an apparatus for canceling interference between a transmitting antenna and a receiving antenna comprising:

a power dividing means for dividing input signal to be transmitted and providing a transmitting antenna with a first divided signal;

an interference canceling means for attenuating and phase-shifting a second divided signal so as to have a selected amplitude and a selected phase;

a power coupling means for combining signal radiated through said transmitting antenna and received by a receiving antenna and signal from said interference canceling means, thereby outputting a desired signal; and

a repeating means for receiving and amplifying said combined signal from said power coupling means so as to be radiated again.

## BRIEF DESCRIPTION OF THE DRAWINGS

Other objects and aspects of the invention will become apparent from the following description of the embodiments with reference to the accompanying drawings in which:

Fig. 1 is a diagram illustrating a transmitting and receiving system of the conventional communication system;
Fig. 2 is a diagram illustrating a characteristic of a bandpass filter of a base station for CDMA(Code Division Multiple Access) communication;
Fig. 3 is a diagram illustrating a conventional ground repeating system;
Fig. 4 is a diagram illustrating a transmitting and receiving system using the radio frequency interference canceler in accordance with the present invention;
Fig. 5 is a detailed diagram illustrating a radio frequency interference canceler in accordance with the present invention;
Fig. 6 is a diagram illustrating a ground repeating system using the radio frequency interference canceler in accordance with the present invention; and
Fig. 7 is a detailed diagram illustrating a ground repeating system using the radio frequency interference canceler in accordance with the present invention.

## DETAILED DESCRIPTION OF THE PREFERRED EMBODIMENTS

Now, the embodiments of the present invention will be described with reference to Figs. 4 through 7.

Fig. 4 illustrates a transmitting and receiving system using the radio frequency interference canceler in accordance with the present invention.

A transmitting and receiving system using the radio frequency interference canceler consists of a transmitter 23, a receiver 24, a power divider 25, an interference canceler 27 and a power coupler 26.

The power divider 25 divides the signal T (t) to be transmitted and provides the transmitting antenna 21 and the interference canceler 27 with the divided signal.

The interference canceler 27 receives the divided signal from the power divider 25 and delays the transmitted signal by wave travel time. The wave travel time refers to the time of travel from the transmitting antenna 21 to the receiving antenna 22. The interference canceler 27 attenuates the provided signal from the power divider 25 until the provided signal has the amplitude as same as that of the signal transmitted from the transmitting antenna 21 to the receiving antenna 22. The signal propagated from the transmitting antenna is attenuated in response to distance between the transmitting antenna and the receiving antenna, antenna performance, environments and so on. Then phase of the attenuated signal by the interference canceler 27 is reversed. The power coupler 26 combines the signal T'(t) from the interference canceler 27 and the signal received by the receiving antenna 22. The signal received by the receiving antenna 22 includes a desired signal R(t) and the signal Tr(t) transmitted through the transmitting antenna 21 and received by the receiving antenna 22. By combination of the signal T'(t) with the signal received by the receiving antenna 22, the interference signal Tr(t) is removed out. Therefore, the signal P(t) provided to the receiver 24 becomes the desired signal R(t).

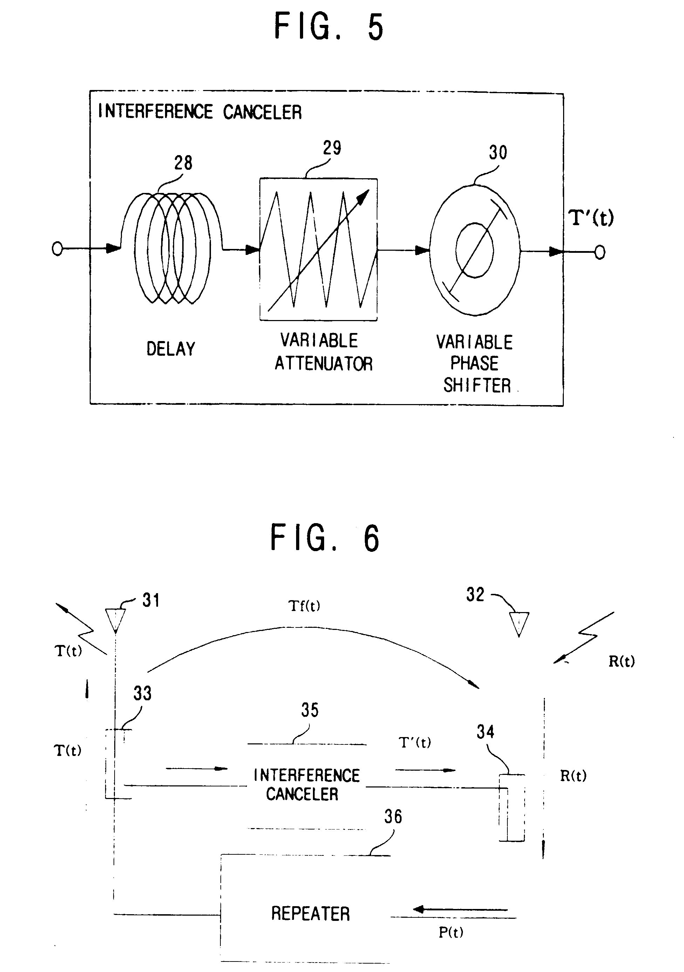

Fig. 5 illustrates the radio frequency interference canceler in accordance with the present invention. The interference canceler 27 comprises a delay 28, a variable attenuater 29 and a variable phase shifter 30, which they may be coupled in serial regardless of connection order.

The delay 28 delays the signal received from the power divider 25 by the signal travel time. The variable attenuater 29 attenuates the delayed signal to the signal of which amplitude is the same as that of the signal Tr(t) radiated through the transmitting antenna 21 and atteunated in response to path loss and antenna performance, environments and so on. In other words, the attenuater may attenuate the received signal so as to become A'=A" as described in equation (5). The variable phase shifter 30 shifts the phase of the attenuated signal by 180°.

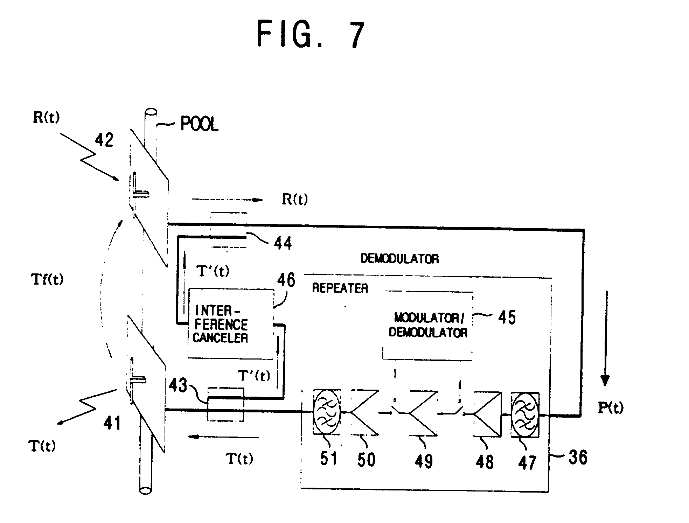

Now, the second embodiment of the present invention will be described with reference to the accompanying Figs. 6 and 7.

Fig. 6 illustrates a repeating system using the radio frequency interference canceler in accordance with the present invention. Fig. 7 illustrates a repeating system using the radio frequency interference canceler in accordance with the present invention in detail.

The repeating system consists of a power divider 33, an interference canceler 35, a power coupler 34 and a repeater 36.

Operations of the power divider 33, the interference canceler 35 and the power coupler 34 are the same as that of the corresponding component in the first embodiment. Therefore, a detailed description of these components will be skipped here.

The repeater 36 amplifies the signal received from the power coupler 34. The amplified signal is provided to the power divider 33, and then is radiated again through the transmitting antenna 31.

The interference canceler 35 cuts the feedback loop consisting of the receiving antenna 32, the repeater 35, the transmitting antenna 31 and free space, such that realization of repeater can be performed regardless of the distance between the transmitting antenna 31 and the receiving antenna 32.

The transmitting antenna 41 and the receiving antenna 42 are placed on a pool. The repeater 36 comprises a bandpass filter 47 passing only the wanted band of signal, a low noise amplifier 48 low-noise-amplifying the signal from the bandpass filter 47, a driving amplifier 49, a power amplifier 50 and a bandpass filter 51. The repeater 36 may further comprises a modulator/demodulator 45 when there is the need to use it. The modulator/demodulator 45 demodulates the received signal and restores the demodulated signal of which errors are occurred during transmission of the signal. Then the modulator/demodulator 45 modulates the restored signal for transmission.

Now, the principles of the present invention will be described.

First, the signal to be radiated through the transmitting antenna 21 or 31 refers to the transmitting signal T(t). A portion of signal to be radiated is branched to the interference canceler 27 or 35. The branched signal T'(t) is delayed, phase-shifted and provided to the power coupler 26 or 34.

A portion of the signal T (t) radiated through the transmitting antenna 21 or 31 is received by the receiving antenna 22 or 32 with propagation loss. Also, a desired signal is received by it. The desired signal and the signal attenuated Tr(t) or Tf(t) by path loss are combined with and offset by the signal T'(t) received from the interference canceler 27 or 35.

The transmitting signal T(t) and the desired signal R(t) can be expressed as equations 1 and 2.

$$T(t) = A\sin wt \tag{1}$$

$$R(t) = B\sin wt \tag{2}$$

The signals Tr(t) or Tf(t) and T'(t) can be expressed as equations 3 and 4, respectively.

$$Tr(t) = A'\sin(wt-\theta)$$
$$\text{or } Tf(t) = A'\sin(wt-\theta) \tag{3}$$

$$T'(t) = A''\sin(wt-\theta) \tag{4}$$

The signal P(t) provided to the receiver 24 or the repeater 36 can be expressed as equation 5.

$$P(t) = R(t)+Tr(t)(or\ Tf(t))+T's(t) \tag{5}$$
$$= R(t)+A'\sin(wt-\theta)+A''\sin(wt-\theta')$$

Assuming A'=A" and $\theta=\theta'+\pi$, the signal P(t) provided to the receiver 24 or the repeater 36 can be expressed as equation 6.

$$P(t) = R(t)+A'\sin(wt-\theta)-A'\sin(wt-\theta)$$

$$= R(t) \qquad\qquad (6)$$

This equation explains that interference between the transmitting and the receiving antennas 21 and 22 or 31 and 32 is completely removed, in which the signal P(t) provided to the receiver 24 or the repeater 36 becomes the received signal R(t). Therefore, the receiver 24 or the repeater 36 may receive the desired signal R(t) which is not affected by the transmitting signal.

If there is one or more transmitting system(s) including a transmitter and a transmitting antenna around the receiver 24, the receiver 24 receives undesired signals from the transmitting systems. In this case, the undesired signal or signals can be cancelled by using the radio frequency interference canceler according to the present invention. Therefore, the interference signals received on the receiver 24 are cancelled by a plurality of radio frequency interference cancelers.

Using the interference canceler between the transmitting antenna and the receiving antenna in accordance with the present invention, both the transmitting antenna and the receiving antenna may be established in a small space or on a pool.

Also, using the present invention, the antennas can be placed on an identical space, and transmission lines can become shorter. Therefore, the cost of establishment is reduced, maintenance of the antennas becomes easier and communication quality can be considerably improved.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An apparatus for canceling radio frequency interference between transmitting antenna and receiving antenna, said apparatus comprising:

   a power dividing means for dividing an input signal from an outside and for providing a transmitting antenna with a first divided signal;
   an interference canceling means for attenuating and phase-shifting a second divided signal so as to have a selected amplitude and a selected phase; and
   a power coupling means for combining signal radiated through said transmitting antenna and received by a receiving antenna and the signal from said interference canceling means, thereby outputting a desired signal.

2. An apparatus claimed as claim 1, wherein said interference canceling means comprises:

   a delay means for delaying said signal from said power dividing means by propagation time of said transmitting signal from said transmitting antenna to said receiving antenna;
   a variable attenuating means for attenuating said signal from said delay means so as to have the same amplitude as the attenuated signal by isolation between said transmitting antenna and said receiving antenna; and
   a variable phase shifting means for phase shifting signal from said variable attenuating means so as to have a reverse phase.

3. An apparatus claimed as claim 1, wherein said interference canceling means comprises:

   a delay means for delaying said signal from said power dividing means by propagation time of said transmitting signal from said transmitting antenna to said receiving antenna;
   a variable phase shifting means for phase shifting signal from said delay means so as to have a reverse phase; and
   a variable attenuating means for attenuating said signal from said variable phase shifting means delay means so as to have the same amplitude as the attenuated signal by isolation between said transmitting antenna and said receiving antenna.

4. An apparatus claimed as claim 1, wherein said interference canceling means comprises:

a variable attenuating means for attenuating said signal from said power diving means so as to have the same amplitude as the attenuated signal by isolation between said transmitting antenna and said receiving antenna; a delay means for delaying said signal from said variable attenuating means by propagation time of said transmitting signal from said transmitting antenna to said receiving antenna; and a variable phase shifting means for phase shifting signal from said delay means so as to have a reverse phase.

5. An apparatus claimed as claim 1, wherein said interference canceling means comprises:

a variable phase shifting means for phase shifting signal from said power dividing means so as to have a reverse phase; a delay means for delaying said signal from said variable phase shifting means by propagation time of said transmitting signal from said transmitting antenna to said receiving antenna; and a variable attenuating means for attenuating said signal from said delay means so as to have the same amplitude as the attenuated signal by isolation between said transmitting antenna and said receiving antenna.

6. An apparatus claimed as claim 1, wherein said interference canceling means comprises:

a variable attenuating means for attenuating said signal from said power diving means so as to have the same amplitude as the attenuated signal by isolation between said transmitting antenna and said receiving antenna; a variable phase shifting means for phase shifting signal from said variable attenuating means so as to have a reverse phase; and a delay means for delaying said signal from said variable phase shifting means by propagation time of said transmitting signal from said transmitting antenna to said receiving antenna.

7. An apparatus claimed as claim 1, wherein said interference canceling means comprises:

a variable phase shifting means for phase shifting signal from said power dividing means so as to have a reverse phase; a variable attenuating means for attenuating said signal from said variable phase shifting means so as to have the same amplitude as the attenuated signal by isolation between said transmitting antenna and said receiving antenna; and a delay means for delaying said signal from said variable attenuating means by propagation time of said transmitting signal from said transmitting antenna to said receiving antenna.

8. A transmitting and receiving system using an apparatus for canceling radio frequency interference between transmitting antenna and receiving antenna, said transmitting and receiving system comprising:

a transmitting means for generating signal to be transmitted; a power dividing means for dividing input signal from said transmitting means and for providing a transmitting antenna with a first divided signal; an interference canceling means for attenuating and phase-shifting a second divided signal so as to have a selected amplitude and a selected phase; a power coupling means for combining signal radiated through said transmitting antenna and received by a receiving antenna and the signal from said interference canceling means, thereby outputting a desired signal; and a receiving means for performing receiving process of signal from said power coupling means.

9. A transmitting and receiving system claimed as claim 8, wherein said interference canceling means comprises:

a delay means for delaying said signal from said power dividing means by propagation time of said transmitting signal from said transmitting antenna to said receiving antenna; a variable attenuating means for attenuating said signal from said delay means so as to have the same amplitude as the attenuated signal by isolation between said transmitting antenna and said receiving antenna; and a variable phase shifting means for phase shifting signal from said variable attenuating means so as to have a reverse phase.

**10.** A transmitting and receiving system claimed as claim 8, wherein said interference canceling means comprises:

a delay means for delaying said signal from said power dividing means by propagation time of said transmitting signal from said transmitting antenna to said receiving antenna;
a variable phase shifting means for phase shifting signal from said delay means so as to have a reverse phase; and
a variable attenuating means for attenuating said signal from said variable phase shifting means delay means so as to have the same amplitude as the attenuated signal by isolation between said transmitting antenna and said receiving antenna.

**11.** A transmitting and receiving system claimed as claim 8, wherein said interference canceling means comprises:

a variable attenuating means for attenuating said signal from said power diving means so as to have the same amplitude as the attenuated signal by isolation between said transmitting antenna and said receiving antenna;
a delay means for delaying said signal from said variable attenuating means by propagation time of said transmitting signal from said transmitting antenna to said receiving antenna; and
a variable phase shifting means for phase shifting signal from said delay means so as to have a reverse phase.

**12.** A transmitting and receiving system claimed as claim 8, wherein said interference canceling means comprises:

a variable phase shifting means for phase shifting signal from said power dividing means so as to have a reverse phase;
a delay means for delaying said signal from said variable phase shifting means by propagation time of said transmitting signal from said transmitting antenna to said receiving antenna; and
a variable attenuating means for attenuating said signal from said delay means so as to have the same amplitude as the attenuated signal by isolation between said transmitting antenna and said receiving antenna.

**13.** A transmitting and receiving system claimed as claim 8, wherein said interference canceling means comprises:

a variable attenuating means for attenuating said signal from said power diving means so as to have the same amplitude as the attenuated signal by isolation between said transmitting antenna and said receiving antenna;
a variable phase shifting means for phase shifting signal from said variable attenuating means so as to have a reverse phase; and
a delay means for delaying said signal from said variable phase shifting means by propagation time of said transmitting signal from said transmitting antenna to said receiving antenna.

**14.** A transmitting and receiving system claimed as claim 8, wherein said interference canceling means comprises:

a variable phase shifting means for phase shifting signal from said power dividing means so as to have a reverse phase;
a variable attenuating means for attenuating said signal from said variable phase shifting means so as to have the same amplitude as the attenuated signal by isolation between said transmitting antenna and said receiving antenna; and
a delay means for delaying said signal from said variable attenuating means by propagation time of said transmitting signal from said transmitting antenna to said receiving antenna.

**15.** A repeating system using an apparatus for canceling interference between a transmitting antenna and a receiving antenna, said repeating system comprising:

a power dividing means for dividing input signal to be transmitted and providing a transmitting antenna with a first divided signal;
an interference canceling means for attenuating and phase-shifting a second divided signal so as to have a selected amplitude and a selected phase;
a power coupling means for combining signal radiated through said transmitting antenna and received by a receiving antenna and the signal from said interference canceling means, thereby outputting a desired signal; and
a repeating means for receiving and amplifying said combined signal from said power coupling means so as to be radiated again.

**16.** A repeating system claimed as claim 15, wherein said interference canceling means comprises:

a delay means for delaying said signal from said power dividing means by propagation time of said transmitting signal from said transmitting antenna to said receiving antenna;
a variable attenuating means for attenuating said signal from said delay means so as to have the same amplitude as the attenuated signal by isolation between said transmitting antenna and said receiving antenna; and
a variable phase shifting means for phase shifting signal from said variable attenuating means so as to have a reverse phase.

**17.** A repeating system claimed as claim 15, wherein said interference canceling means comprises:

a delay means for delaying said signal from said power dividing means by propagation time of said transmitting signal from said transmitting antenna to said receiving antenna;
a variable phase shifting means for phase shifting signal from said delay means so as to have a reverse phase; and
a variable attenuating means for attenuating said signal from said variable phase shifting means delay means so as to have the same amplitude as the attenuated signal by isolation between said transmitting antenna and said receiving antenna.

**18.** A repeating system claimed as claim 15, wherein said interference canceling means comprises:

a variable attenuating means for attenuating said signal from said power diving means so as to have the same amplitude as the attenuated signal by isolation between said transmitting antenna and said receiving antenna;
a delay means for delaying said signal from said variable attenuating means by propagation time of said transmitting signal from said transmitting antenna to said receiving antenna; and
a variable phase shifting means for phase shifting signal from said delay means so as to have a reverse phase.

**19.** A repeating system claimed as claim 15, wherein said interference canceling means comprises:

a variable phase shifting means for phase shifting signal from said power dividing means so as to have a reverse phase;
a delay means for delaying said signal from said variable phase shifting means by propagation time of said transmitting signal from said transmitting antenna to said receiving antenna; and
a variable attenuating means for attenuating said signal from said delay means so as to have the same amplitude as the attenuated signal by isolation between said transmitting antenna and said receiving antenna.

**20.** A repeating system claimed as claim 15, wherein said interference canceling means comprises:

a variable attenuating means for attenuating said signal from said power diving means so as to have the same amplitude as the attenuated signal by isolation between said transmitting antenna and said receiving antenna;
a variable phase shifting means for phase shifting signal from said variable attenuating means so as to have a reverse phase; and
a delay means for delaying said signal from said variable phase shifting means by propagation time of said transmitting signal from said transmitting antenna to said receiving antenna.

# FIG. 1
## (PRIOR ART)

# FIG. 2

# FIG. 3

# FIG. 4

# FIG. 5

INTERFERENCE CANCELER

28      29      30

T'(t)

DELAY      VARIABLE ATTENUATOR      VARIABLE PHASE SHIFTER

# FIG. 6

31      Tf(t)      32

T(t)      R(t)

33      35      34

T(t)      T'(t)      R(t)

INTERFERENCE CANCELER

36

REPEATER      P(t)

# FIG. 7